# EUROPÄISCHE PATENTANMELDUNG

(11) **EP 3 409 121 A1**
(43) Veröffentlichungstag der Anmeldung: **05.12.2018**
(21) Anmeldenummer: 17173961.8
(22) Anmeldetag: 01.06.2017
(51) Int. Cl.: A21B 5/04

(54) **GRILLVORRICHTUNG, GRILLSET UND GRILLSYSTEM FÜR AUF WALZEN GEWICKELTEN TEIG**

(71) Anmelder: Koplar, Richard, 86911 Dießen am Ammersee (DE)
(72) Erfinder: Koplar, Richard, 86911 Dießen am Ammersee (DE)
(74) Vertreter: Mollekopf, Gerd Willi

(57) **Zusammenfassung**

Die Erfindung betrifft eine Grillvorrichtung für auf Walzen gewickelten Teig, ein Grillset mit einer solchen Grillvorrichtung und zumindest einer Walze, sowie ein modulares Grillsystem mit zumindest zwei solchen nebeneinander angeordneten Grillvorrichtungen wobei eine Grillvorrichtung (36a-d) aufweist: einen Grundkörper mit umlaufend angeordneten Seitenelementen (4a; 6a; 8a-d; 10a-d), wobei die Seitenelemente einen Grillbereich der Grillvorrichtung (36a-d') umschließen und zumindest eine Rückseite (6a), eine Vorderseite (4a) und zwei die Rück- und Vorderseite verbindende Seitenteile (8a-d; 10a-d) aufweisen, eine Steuereinheit, eine rückseitig und/oder vorderseitig am Grundkörper angeordnete Lagereinrichtung (12a-d; 14a-h; 16a-h) für zumindest eine Walze, wobei mittels der Lagereinrichtung (12a-d; 14a-h; 16a-h) zumindest eine Walze im Grillbereich horizontal oder im Wesentlichen horizontal um ihre Drehachse (A) drehbar gelagert aufnehmbar ist, einen Motor zum rotierenden Antreiben von in der Lagereinrichtung (12a-d; 14a-h; 16a-h) aufnehmbaren Walzen, zumindest eine zum Grillbereich weisende Heizeinrichtung, vorzugsweise zumindest eine Flächenheizeinrichtung, wobei die zumindest eine Heizeinrichtung an einem der Seitenteile (8a-d; 10a-d) angeordnet ist.

## Beschreibung

Die Erfindung betrifft eine Grillvorrichtung für auf Walzen gewickelten Teig oder gewickeltes Grillgut, insbesondere zur Herstellung von Baumstriezeln, ein Grillset mit einer solchen Grillvorrichtung und zumindest einer Walze, sowie ein modulares Grillsystem aus zumindest zwei nebeneinander angeordneten Grillvorrichtungen oder Grillsets.

Baumstriezel ist ein Gebäck, das traditionell in Handarbeit zubereitet wird. Dazu werden Teigstreifen oder Teigstränge (z.B. aus Hefeteig) helixförmig auf eine zylindrische Walze aufgewickelt, so dass benachbarte Ränder des Teigstreifens sich zumindest berühren oder auch überlappen. Der Teig auf der Walze wird durch kontinuierliches Drehen über einer Hitzequelle wie z.B. über einer Feuerstelle gegrillt bzw. gegart. Nachdem der Teig gar ist, wird er von der Walze gelöst, so dass ein hohles bzw. rohrförmiges Gebäckstück vorliegt.

Es ist Aufgabe der Erfindung, eine Grillvorrichtung, ein Grillset und ein modulares Grillsystem vorzusehen, die bzw. das ein zügiges und gleichmäßiges Grillen bzw. Garen von aufWalzen gewickeltem Teig ermöglicht.

Diese Aufgabe wird mit den Merkmalen des Anspruchs 1,13 bzw. 14 gelöst. Vorteilhafte Ausgestaltungen sind Gegenstand der Unteransprüche.

Gemäß Anspruch 1 wird eine Grillvorrichtung für auf Walzen gewickelten Teig oder gewickeltes Grillgut bereitgestellt. Die Grillvorrichtung weist auf: einen Grundkörper mit umlaufend angeordneten Seitenelementen bzw. Seitenwänden, wobei die Seitenelemente einen Grillbereich bzw. Innenraum der Grillvorrichtung umgeben bzw. ausbilden. Die Seitenelemente weisen zumindest eine Rückseite, eine Vorderseite und zwei die Rück- und Vorderseite verbindende Seitenteile auf. Vorzugsweise sind die Seitenelemente vertikal oder im Wesentlichen vertikal ausgerichtet. Jedes Seitenelement kann aus einem oder mehreren Teilen bestehen, kann insbesondere mehrwandig, z.B. doppelwandig, ausgebildet sein. Beispielsweise können einzelne Seitenelemente miteinander verschraubt, vernietet oder verschweißt sein und/oder mehrere Seitenelemente können einteilig z.B. aus einem (gebogenen) Blech ausgebildet sein.

Die Grillvorrichtung weist eine rückseitig und/oder vorderseitig am Grundkörper angeordnete Lagereinrichtung für zumindest eine Walze bzw. Walzenachse auf. Mittels der Lagereinrichtung kann zumindest eine Walze horizontal oder im Wesentlichen horizontal um ihre Drehachse (Walzenachse) drehbar bzw. rotierbar gelagert aufgenommen werden. Das "im Wesentlichen horizontal" umfasst eine schräge Lagerung der Walzenachse innerhalb eines Bereichs von ± 30°, ±20°, ±15°, oder ±10° relativ zur Horizontalen. Die Horizontale oder das "im Wesentlichen horizontal" bezieht sich auf die Aufstellung der Grillvorrichtung bei vorgesehenem Normalbetrieb (z.B. Aufstellung auf einer horizontalen Arbeits- oder Tischplatte). Die Walzenachse bzw. Drehachse der zumindest einen Walze ist an der Rückseite und/oder der Vorderseite des Grundkörpers so gelagert, dass die Walzen in Bezug auf die Walzenachse liegend in der Lagereinrichtung aufgenommen werden. Eine Walze zur Verwendung mit der Grillvorrichtung weist vorzugsweise auf: einen Walzenkörper, auf dessen Mantelfläche das zu grillende Gut bzw. der zu grillende Teig gewickelt werden kann, eine aus dem Walzenkörper axial herausragende Walzenachse zum Lagern der Walze in der Lagereinrichtung und einen Griff an einem Ende der Walze, um die Handhabung der Walze beim Einsetzen/Herausnehmen aus der Grillvorrichtung zu erleichtern.

Ein Motor ist vorgesehen, um in der Lagereinrichtung aufnehmbare bzw. aufgenommene Walzen um die Walzenachse rotierend anzutreiben. Mittels einer Steuereinheit der Grillvorrichtung kann der Motor bzw. die Motorgeschwindigkeit gesteuert werden. Beispielsweise kann die Motorgeschwindigkeit stufenlos auf einen gewünschten Wert eingestellt werden. Alternativ können mehrere vorgegebene Motorgeschwindigkeiten vorgesehen sein, so dass die Geschwindigkeit stufenweise erhöht/erniedrigt werden kann. Weiter alternativ kann kostengünstig nur eine vorbestimmte Motorgeschwindigkeit vorgesehen sein, so dass die Walze/n immer mit der gleichen Geschwindigkeit um ihre Achse gedreht werden kann/können.

Zum Garen/Grillen von Teig, der auf den in der Lagereinrichtung gelagerten Walzen gewickelt ist, weist die Grillvorrichtung zumindest eine zum Grillbereich (Innenraum) bzw. nach innen weisenden Heizeinrichtungen auf, so dass die (Haupt-) Abstrahlrichtung der Heizeinrichtung zum Grillbereich weist. Die zumindest eine Heizeinrichtung ist an einem der Seitenteile des Grundkörpers angeordnet, so dass die zumindest eine Heizeinrichtung zwischen Rück- und Vorderseite verläuft bzw. parallel oder im Wesentlichen parallel zu in der Lagereinrichtung aufnehmbaren Walzen/Walzenachsen verläuft. Beispielsweise kann die zumindest eine Heizeinrichtung, insbesondere ein hitzeabstrahlendes Element der Heizeinrichtung, an einem Seitenteil befestigt sein. Insbesondere kann eine Heizeinrichtung vor einem Seitenteil und/oder zumindest teilweise in einem Seitenteil angeordnet sein, so dass ein platzsparender Aufbau bereitgestellt wird.

Bei Verwendung der Grillvorrichtung können so in der Lagereinrichtung gelagerte Walzen von der Seite gegart/gegrillt werden. Durch die seitliche Anordnung des/der Heizeinrichtung(en) wird verhindert, dass während eines Grillvorgangs herabfallender Teig in die Heizquelle fällt und verbrennt. D.h. eine Rauchbelastung für Personal und Käufer durch verbrennenden Teig oder sonstige nach unten fallende/tropfende Zutaten wird verhindert. Zusätzlich wird durch die seitliche Anordnung verhindert, dass die zumindest eine Heizeinrichtung während eines Grillvorgangs durch herabfallendes Material verunreinigt und dadurch seine Heizleistung verringert wird.

Vorzugsweise ist die zumindest eine Heizeinrichtung als Flächenstrahler ausgebildet, so dass bei der Verwendung der Grillvorrichtung bzw. beim Grillen eine möglichst große (Abstrahl-) Fläche zum gleichmäßigen und zügigen Garen von Teig bereitgestellt werden kann. Bevorzugt entspricht dabei die Länge bzw. Abmessung der zumindest einen Heizeinrichtung zwischen Rück- und Vorderseite, der Länge bzw. Abmessung der Walze bzw. des Walzenkörpers, die in der Lagereinrichtung aufnehmbare ist. Besonders bevorzugt sind zumindest zwei Heizeinrichtungen vorgesehen, wobei an gegenüberliegenden Seitenteilen jeweils eine zum Grillbereich weisende Heizeinrichtung angeordnet ist. Im Folgenden wird die Heizeinrichtung auch als Heizstrahler bezeichnet.

Gemäß einer bevorzugten Ausgestaltung sind mittels der Lagereinrichtung zwischen der Rückseite und Vorderseite zumindest zwei Walzen nebeneinander und horizontal oder im Wesentlichen horizontal um ihre Drehachsen drehbar gelagert aufnehmbar, wobei an gegenüberliegenden Seitenteilen des Grundkörpers jeweils ein Heizstrahler (bzw. eine Heizeinrichtung) angeordnet ist. In dieser Ausgestaltung ist somit für jede aufzunehmende Walze ein (seitlich dazu angeordneter) Heizstrahler vorgesehen. Damit kann auf jeder Walze Teig von einer Seite bzw. seitlich gegrillt werden, wobei der Teig durch das Drehen der Walze/n um ihre Achse/n gleichmäßig gegart wird. Diese Ausgestaltung ist besonders effizient bezogen auf Energie und Grill-/Gardauer.

Besonders bevorzugt sind mittels der Lagereinrichtung genau zwei Walzen bzw. maximal zwei Walzen wie oben beschrieben horizontal nebeneinander aufnehmbar mit zwei an gegenüberliegenden Seitenteilen angeordneten Heizstrahlern, so dass jeder Walze ein seitlich dazu angeordnetes Heizelement zugeordnet ist. Vorteilhaft ist (in vertikaler Richtung) nur eine (Walzen-)Ebene vorgesehen in der Walzen horizontal oder im Wesentlichen horizontal drehbar gelagert sind bzw. mittels der Lagereinrichtung werden Walzen nicht (vertikal) übereinander gelagert. Durch eine solche (einlagige) Anordnung von Walzen bzw. Lagerung von Walzen in nur einer Eben ist jede Walze während eines Grillvorgangs von oben gut einsehbar und damit das Grillergebnis gut kontrollierbar.

Bevorzugt weist die Lagereinrichtung für jede aufzunehmende Walze zumindest ein Stützelement zum Stützen der jeweiligen Walzenachse an der Rückseite und/oder der Vorderseite des Grundkörpers auf. Beispielsweise kann an ein Stützelement als Aufnahmeöffnung bzw. Stützaufnahmen in der Rück- und/oder Vorderseite vorgesehen sein, in die eine Walzenachse formschlüssig einsteckbar ist. Zusätzlich oder alternativ können an Rückseite und/oder Vorderseite nach oben offene Stützelemente vorgesehen sein, in die einfach ein oder beide Enden einer Walzenachse (von oben) abgelegt werden können. In jeder Ausgestaltung kann vorzugsweise eine Walze durch Anheben und/oder Ziehen der Walze aus der Lagereinrichtung entfernt werden.

Vorteilhaft ist eine am Grundkörper gelagerte Walze manuell ausbaubar und einbaubar gelagert. Besonders vorteilhaft ist die Walze ohne Werkzeug ausbaubar und einbaubar. Auf diese Weise kann die mit Teig umwickelte Walze einfach und schnell mit der Hand in die Grillvorrichtung eingesetzt und nach dem Grillen herausgenommen werden.

Vorzugsweise ist zum Übertragen des Drehmoments des Motors auf eine in die Lagereinrichtung aufnehmbar Walze eine Motorwelle des Motors mit der Walze, insbesondere mit einer Walzenachse der Walze, lösbar und form- und/oder kraftschlüssig verbindbar. Zusätzlich oder alternativ weist zum Übertragen des Drehmoments des Motors auf eine in die Lagereinrichtung aufnehmbar Walze der Motor ein erstes Form- und/oder Kraftschlusselement auf, das in ein zweites Form- und/oder Kraftschlusselement form- und/oder kraftschlüssig eingreift, das an einem Ende der Walze, insbesondere einem Ende der Walzenachse angeordnet ist. Bevorzugt ist das erste Form- und/oder Kraftschlusselement mit dem zweiten Form- und/oder Kraftschlusselement manuell und/oder ohne Werkzeug wiederlösbar verbindbar. Beispielsweise kann die Walzenachse auf die Motorwelle gesteckt werden. Beispiele für mögliche Verbindungen zwischen Walzenachse und Motorwelle sind: Zapfenverbindung, Passfederverbindung, Keilwellenverbindung, Zahnwellenverbindung, Polygonwellenverbindung oder Stirnverzahnung.

Der oder die Heizstrahler können gasbetrieben oder elektrisch betrieben sein. Beispielsweise können folgende Heizstrahler verwendet werden: Gasheizstrahler, elektrischer Heizstrahler, wie z.B. Quarzstrahler, Halogenstrahler. Gemäß einer bevorzugten Ausgestaltung ist der zumindest ein Heizstrahler als Infrarotstrahler mit zumindest einer Keramikplatte als Glühkörper ausgebildet (Flächenstrahler). Die von der zumindest einen Keramikplatte ausgebildete (Abstrahl-)Fläche kann z.B. flach ausgebildet sein. Zusätzlich oder alternativ kann die Keramikplatte zumindest teilweise gebogen bzw. gekrümmt sein, insbesondere so dass die Hitze abstrahlende (Abstrahl-)Fläche parallel oder im Wesentlichen parallel zu einer benachbart zum Heizstrahler gelagerten Walzenoberftäche/Walzenmantelfläche ist. Ein solcher keramischer Infrarot-Flächenstrahler kann gasbetrieben oder elektrisch betrieben sein.

Vor dem zumindest einen Heizstrahler, insbesondere zwischen Heizstrahler und Grillbereich bzw. zwischen Heizstrahler und in der Lagereinrichtung lagerbaren Walzen, kann ein Berührungsschutz angeordnet sein, um ein unabsichtliches Berühren von heißen Teilen des Heizstrahlers zu verhindern. Beispielsweise kann ein (flächiger) Berührungsschutz in Form eines (Metall-)Gitters, einer Glasscheibe oder einer Glaskeramikscheibe vorgesehen sein.

Für jeden Heizstrahler kann ein Schalter vorgesehen sein, so dass jeder Heizstrahler einzeln bzw. unabhängig von den anderen Heizstrahlern ein-/ausgeschalten werden kann und/oder dessen Heizleistung eingestellt werden kann. Damit kann je nach Bedarf energiesparend und flexibel jeder Heizstrahler einzeln ein-/ausgeschalten werden. Alternativ kann ein Schalter zum gemeinsamen Ein-/Ausschalten und/oder dem Einstellen der Heizleistung von zumindest zwei oder mehr Heizstrahlern vorgesehen sein.

Vorteilhaft weist der Grundkörper ein an die Rückseite, Vorderseite und Seitenteile unten anschließendes Bodenteil auf. Am Bodenteil ist zumindest ein aus dem Grundkörper herausziehbarer Auszug angeordnet und/oder das Bodenteil ist als zumindest ein Auszug bzw. Schublade ausgebildet. Ein Auszug bzw. der herausziehbare Teil des Auszugs kann plattenförmig (z.B. ebenes Blech) oder wannenförmig (z.B. Schublade) ausgebildet sein. Die Oberseite des zumindest einen Auszugs bzw. der zumindest einen Schublade ist zum Innenraum/Grillbereich des Grundkörpers offen, so dass bei der Verwendung der Grillvorrichtung von in der Lagereinrichtung aufgenommenen Walzen herabfallendes Material, wie z.B. Teig, von dem Auszug /der Schublade aufgefangen wird. Die Reinigung der Grillvorrichtung wird durch den herausziehbaren Auszug vereinfacht. Insbesondere kann der Auszug / die Schublade bereits gereinigt werden bevor die Grillvorrichtung bzw. die Heizstrahler vollständig abgekühlt sind. Zudem ist dadurch auch während des Betriebs der Grillvorrichtung eine Zwischenreinigung möglich. Beispielsweise kann für jede aufzunehmende Walze ein Auszug/ eine Schublade vorgesehen sein. Alternativ kann für mehrere aufzunehmende Walzen, insbesondere alle in einer Grillvorrichtung aufzunehmenden Walzen, ein gemeinsamer Auszug bzw. eine gemeinsame Schublade vorgesehen sein.

Bevorzugt ist der zumindest eine Auszug wannenförmig und wasserdicht, insbesondere als wasserdichte Schublade, ausgebildet, so dass bei der Verwendung der Grillvorrichtung die Schublade mit Wasser gefüllt werden kann. Die Schublade kann damit als Wasserschale verwendet werden. Während eines Grillvorgangs verhindert das Wasser ein Anbrennen bzw. Festsetzen von herabfallendem Material in der Schublade. Zusätzlich werden die Baumstriezel durch das während des Grillens aus der Schublade langsam verdampfende Wasser besonders saftig.

Gemäß einer bevorzugten Ausgestaltung weist die Grillvorrichtung eine Abdeckhaube (Spritzschutzhaube) auf, die den Grillbereich bzw. Innenraum der Grillvorrichtung zur Rückseite, insbesondere zur Rückseite und nach oben, abschirmt. Vorzugsweise schließt die Abdeckhaube an die Rückseite an. Diese Ausgestaltung ist besonders vorteilhaft wenn die Grillvorrichtung z.B. auf Märkten im Kontakt mit Kunden verwendet wird bzw. wenn Kunden bei der Herstellung der Baumstriezel (von der Rückseite aus) zusehen. Die Rückseite der Grillvorrichtung entspricht der Kundenseite (dem Kunden zugewandte Seite) und die Vorderseite der Grillvorrichtung entspricht der Bedienseite oder Personalseite, d.h. die Seite von der aus Personal die mit Teig umwickelten Walzen einsetzt bzw. die Grillvorrichtung bedient. Mittels der Abdeckhaube wird verhindert, dass von der Rückseite (Kundenseite) unbeabsichtigt in den Grillbereich gefasst werden kann oder etwas in den Grillbereich bzw. auf den Teig fällt. Vorzugsweise ist die Abdeckhaube zumindest teilweise transparent, so dass Kunden den Grillvorgang bzw. die Herstellung von Baumstriezeln beobachten können.

Vorteilhaft verläuft die Abdeckhaube von der Rückseite zur Vorderseite ansteigend nach oben. Beispielsweise kann die ansteigende Fläche der Abdeckhaube schräg oder gebogen ausgebildet sein. Die Abdeckhaube kann einteilig oder aus mehreren miteinander verbunden Elemente ausgebildet sein, z.B. in Rahmenbauweise. Da aufgrund dieser Ausgestaltung an der Vorderseite (Personalseite) der Grillvorrichtung nach oben mehr Platz vorhanden ist, hat das Personal zum Entnehmen/Einsetzten von Walzen nach oben mehr Spielraum. Durch die von der Rück- zur Vorderseite ansteigend nach oben verlaufende Abdeckhaube wird das Entnehmen und Einsetzen der Walzen bei Verwendung der Grillvorrichtung erleichtert.

Bevorzugt ist (vorderseitig) in der Abdeckhaube zumindest eine Öffnung zum Innenraum der Grillvorrichtung vorgesehen, wobei mittels der zumindest einen Öffnung Walzen in die Lagereinrichtung einsetzbar und aus der Lagereinrichtung entnehmbar sind. Die Abdeckhaube kann feststehend ausgebildet sein, insbesondere nicht schwenkbar sein, so dass in dieser Ausgestaltung die Bestückung der Grillvorrichtung mit Walzen durch die zumindest eine Öffnung möglich ist ohne zusätzlich die Abdeckhaube bewegen zu müssen.

Die Grillvorrichtung kann eine Schwenkvorrichtung für die Abdeckhaube aufweisen. Zumindest ein Teil der Abdeckhaube ist mittels der Schwenkvorrichtung von einer Geschlossenstellung in eine Offenstellung schwenkbar und umgekehrt. Der schwenkbare Teil der Abdeckhaube kann mittels der Schwenkvorrichtung an der Rückseite, Vorderseite, den zwei Seitenteilen und/oder an einem feststehenden Teil der Abdeckhaube befestigt sein. Insbesondere kann nur ein Teil der Abdeckhaube oder alternativ die gesamte Abdeckhaube mittels der Schwenkvorrichtung schwenkbar sein. Falls nur ein Teil der Abdeckhaube schwenkbar ist, kann die Schwenkvorrichtung den schwenkbaren Teil der Abdeckhaube z.B. mit dem feststehenden Teil der Abdeckhaube oder mit einer oder mehreren der Seitenelemente (vorne, hinten, seitlich) verbinden. Beispielsweise weist die Schwenkvorrichtung zumindest ein Scharnier oder Band auf und kann zusätzlich ein oder mehr Dämpfelemente zum leichteren Schwenken oder Öffnen der Abdeckhaube bzw. des Teils der Abdeckhaube aufweisen. Durch die schwenkbare Abdeckhaube sind der Grillraum und die Innenseite der Abdeckhaube für eine Reinigung besser zugänglich.

Der Grundkörper, die Lagereinrichtung und/oder die Schublade können aus Metallblech, insbesondere Edelstahlblech, ausgebildet sein. Für eine kostengünstige Herstellung sind die Bleche mittels Schrauben und/oder Nieten miteinander verbunden. Vorzugsweise sind die Bleche nicht miteinander verschweißt.

Bevorzugt ist die Grillvorrichtung bzw. der Abstand zwischen Rück- und Vorderseite so ausgebildet, dass Walzen mit einer Walzenlänge zwischen 13-50 cm, 15-48 cm, 20-45 cm, 25-44 cm, 28-43 cm in der Lagereinrichtung drehbar gelagert aufnehmbare sind. Besonders bevorzugt Walzen mit einer Walzenlänge von oder von etwa 42 cm oder mit einer Walzenlänge von oder von etwa 30 cm. Die Walzenlänge entspricht oder entspricht in etwa der maximalen Länge eines mit der Grillvorrichtung erzeugbaren Gebäcks/Baumstriezels bzw. die Walzenlänge bezieht sich auf den Teil der Walze, der bei der Verwendung mit Teig umwickelt wird.

Gemäß einer Ausgestaltung wird ein Grillset bzw. eine Grillanordnung bereitgestellt mit einer wie oben beschriebenen Grillvorrichtung und zumindest einer Walze zur wie oben beschriebenen Verwendung in der Grillvorrichtung. Besonders bevorzugt besteht das Grillset aus einer Grillvorrichtung mit einer Lagereinrichtung für genau zwei Walzen und zwei seitlichen Heizstrahlern wie oben beschrieben.

Gemäß einer weiteren bevorzugten Ausgestaltung wird ein modulares Grillsystem für auf Walzen gewickelten Teig bereitgestellt. Das Grillsystem weist zumindest zwei wie oben beschrieben Grillvorrichtungen oder Grillsets auf, die (modular) nebeneinander angeordnet sind. Insbesondere Grillvorrichtungen oder Grillsets mit Lagereinrichtungen zum drehbaren Lagern von zwei Walzen nebeneinander und zwei Heizstrahlern, die an gegenüberliegenden Seitenteilen des jeweiligen Grundkörpers angeordnet sind. Bevorzugt weist jedes (Grillvorrichtungs-)Modul immer zwei nebeneinanderliegende Walzen mit zu den Walzen außenliegenden Heizstrahlern auf. Dadurch ist mit dem Grillsystem eine modulweise bzw. blockweise Anordnung von 2, 4, 6, 8, 10 usw. Walzen nebeneinander möglich. Beispielsweise kann das modulare Grillsystem eine gemeinsame (einteilige) Rückseite und/oder Vorderseite aufweisen, so dass das Grillsystem von außen eine einheitliche Fläche aufweist, die einfach zu reinigen ist. Alternativ kann für das Grillsystem eine zusätzliche Rückseite und/oder Vorderseite vorgesehen sein, die die Rück- und/oder Vorderseiten der einzelnen Grillvorrichtungen abdeckt.

Vorzugsweise liegt bei nebeneinanderliegenden Grillvorrichtungen der Abstand zwischen Glühkörpern (Keramikplatten) nebeneinanderliegender Heizstrahler:
- bei gasbetriebenen Heizstrahlern zwischen 7-12 cm, vorzugsweise 8-11cm, besonderes bevorzugt bei oder bei etwa 9 cm, und
- bei elektrisch betriebenen Heizstrahlern zwischen 4-8 cm, vorzugsweise 5-7 cm, besonderes bevorzugt bei oder bei etwa 6 cm.
Die angegebenen Abstände gewährleisten einen sicheren Betrieb des Grillsystems während gleichzeitig der Platzbedarf des Grillsystems möglichst gering gehalten wird.

Eine wie oben beschriebene Abdeckhaube kann jeweils für jede Grillvorrichtung eines Grillsystems vorgesehen sein. Alternativ kann für mehrere nebeneinander liegende Grillvorrichtungen bzw. für das ganze Grillsystem eine gemeinsame Abdeckhaube vorgesehen sein, die alle Grillbereiche bzw. Innenräume der Grillvorrichtungen des Grillsystems zur Rückseite, insbesondere zur Rückseite und nach oben, abschirmt.

Anhand von Figuren werden Ausführungsformen der Erfindung näher erläutert. Es zeigen:
- Fig. 1: eine vorderseitige Perspektivansicht eines modularen Grillsystems gemäß einer ersten Ausgestaltung mit vier nebeneinander angeordneten Grillvorrichtungen und elektrisch betriebenen Heizstrahlern,
- Fig. 2: eine Explosionsansicht des Grillsystems von Fig. 1,
- Fig. 3: eine vorderseitige Perspektivansicht des Grillsystems von Fig. 1 ohne Rück- und Vorderseite,
- Fig. 4: eine vorderseitige Perspektivansicht eines modularen Grillsystems gemäß einer zweiten Ausgestaltung mit einer Abdeckhaube und gasbetriebenen Heizstrahlern,
- Fig. 5: eine vorderseitige Perspektivansicht des Grillsystems von Fig. 4 ohne Vorder- und Rückseite,
- Fig. 6: eine vorderseitige Perspektivansicht eines Teils des Grillsystems von Fig. 4, und
- Fig. 7: eine Explosionsansicht des Grillsystems von Fig. 4,
- Fig. 8: eine vorderseitige Perspektivansicht des Grillsystems von Fig. 1 mit einer Abdeckhaube und elektrisch betriebenen Heizstrahlern,
- Fig. 9: eine rückseitige Perspektivansicht des Grillsystems von Fig. 8, und
- Fig. 10a-b: schematische, nicht maßstabsgerechte Schnittdarstellung eines Grillsystems von vorne und von der Seite zur Illustration der Anordnung von Walzen in einem der Grillsystems der Fig. 1 bis Fig. 9.

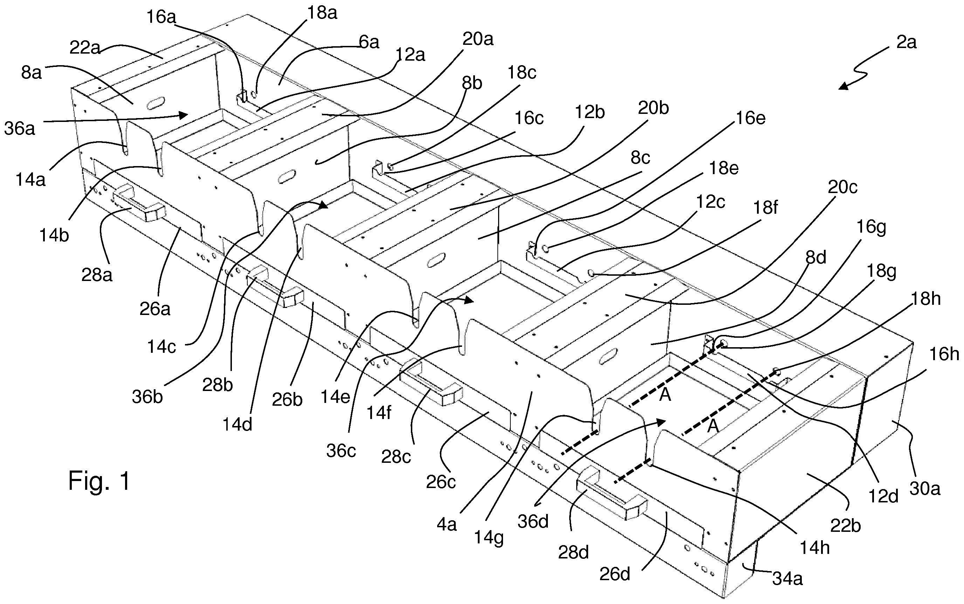

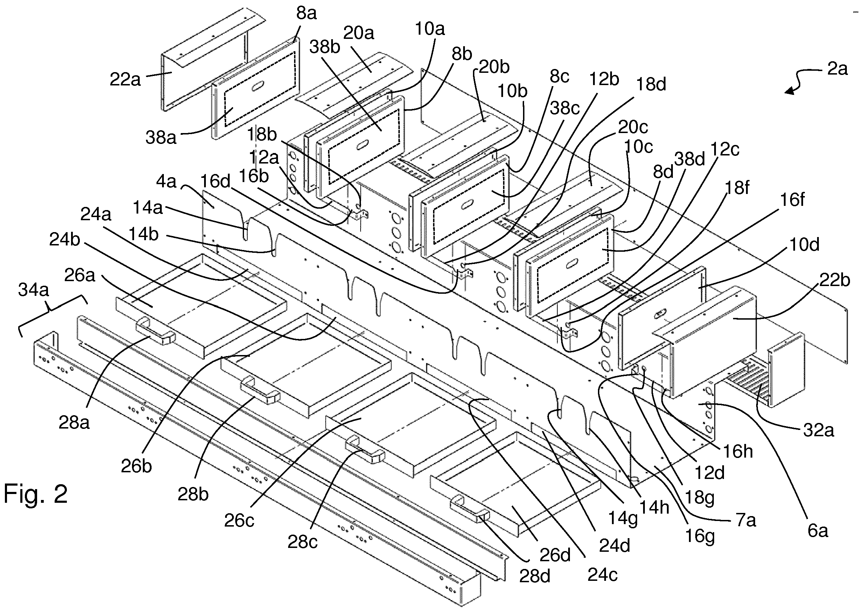

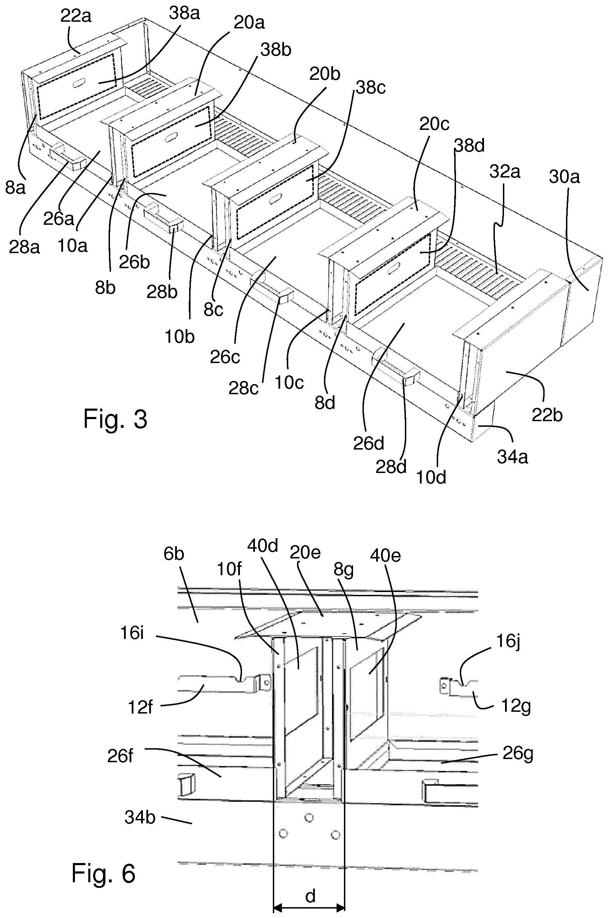

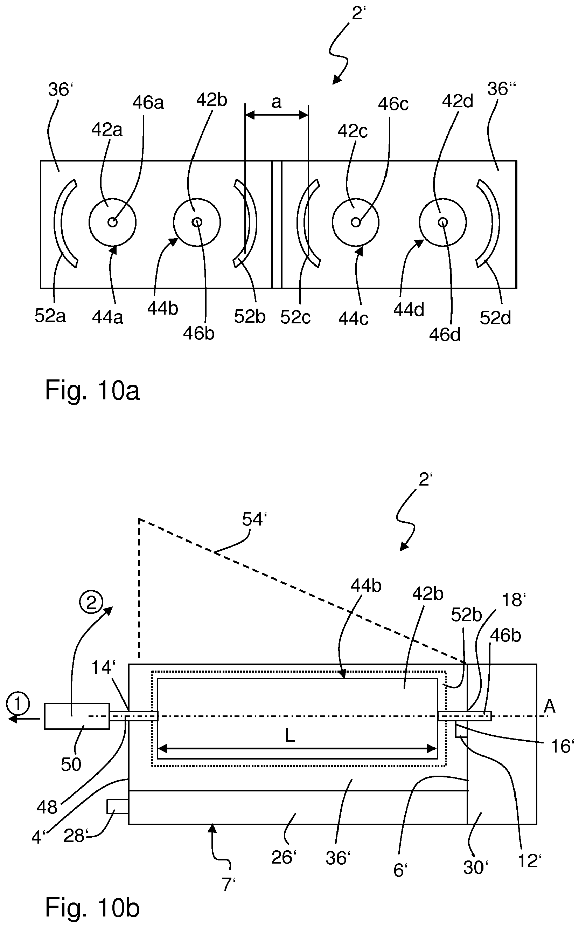

Fig. 1 zeigt eine Perspektivansicht eines modularen Grillsystems 2a gemäß einer ersten Ausgestaltung mit vier modular nebeneinander angeordneten Grillvorrichtungen 36a-d zum Grillen/Garen von auf Walzen A-d (Fig. 10a, 10b) gewickeltem Teig mittels elektrisch betriebenen Heizstrahlern bzw. Heizeinrichtungen. Fig. 2 zeigt eine Explosionsansicht des Grillsystems 2a von Fig. 1. Fig. 3 zeigt eine Perspektivansicht des Grillsystems 2a von Fig. 1 ohne Rückseite 6a und Vorderseite 4a. Mit dem Grillsystem 2a können sogenannte Baumstriezel, ein rohrförmiges Gebäck, hergestellt werden. Dazu wir aufWalzen 42a-d gewickelter Teig in den Grillvorrichtungen 36a-d gegrillt.

Jede der Grillvorrichtungen 36a-d weist einen von Seitenelementen bzw. Seitenwänden umschlossenen Grillraum bzw. Grillbereich auf. Die Seitenelemente jeder Grillvorrichtung 36a-d weisen eine Rückseite 6a, eine Vorderseite 4a und jeweils ein die Rück- und Vorderseite 6a, 4a verbindendes linkes Seitenteil 8a-d und rechtes Seitenteil 10a-d auf. Die Begriffe 'rechts' und 'links' sind Bezug auf die dargestellte vorderseitige Ansicht des Grillsystems 2a bzw. der Grillvorrichtungen 36a-d zu verstehen. In dieser Ausgestaltung sind die Rückseiten 6a und Vorderseiten 4a der Grillvorrichtungen 36a-d einteilig bzw. aus einem Element (z.B. Blech) ausgebildet, so dass das Grillsystem 2a eine durchgehende und einfach zu reinigende Außenfläche aufweist. Die Seitenteile 8a-d, 10a-d sind mittels oberen Seitenteilabdeckungen 20a-c und außenliegenden Seitenteilabdeckungen 22a, 22b zur einfachen Reinigung des Grillsystems 2a abgedeckt (Fig. 2). Alternativ können die modular nebeneinander angeordneten Grillvorrichtungen 36a-d jeweils als einzelne Module bzw. Blöcke ausgebildet sein mit voneinander getrennten Rück- und/oder Vorderseiten, so dass sich durch das nebeneinander Anordnen (Montieren) der einzelnen Module bzw. Grillvorrichtungen eine gemeinsame Außenfläche des Grillsystems ergibt.

Das Grillsystem 2a kann beispielsweise als mobile Einheit zur Herstellung (und Verkauf) von Baumstriezeln auf Märkten eingesetzt werden. Dabei ist die Rückseite 6a dem Kunden zugewandt (Kundenseite) und die Vorderseite 4a ist dem Personal bzw. der Person zugewandt, die mit dem Grillsystem Baumstriezel grillt/gart (Bedienseite). Da Kunden in den (nach oben offenen) Grillraum sehen können, können sie die Herstellung von Baumstriezeln beobachten. Die "Sichtbarkeit" des Grillvorgangs interessiert und animiert Kunden zum Kauf.

Im Grillraum jeder Grillvorrichtung 36a-d können zwei Walzen 42a-d (Fig. 10a) in einer Lagereinrichtung um ihre Walzenachsen (Drehachsen) A drehbar gelagert werden. Um die Anordnung von Walzen 42a-d in wie oben und unten beschriebenen Grillvorrichtungen 36a-d zu illustrieren zeigen Fig. 10a und Fig. 10b schematische, nicht maßstabsgerechte geschnittene Rück- und Seitenansichten von zwei modular nebeneinander angeordneten Grillvorrichtungen 36', 36" mit Walzen 42a-d und den zugehörigen Heizstrahlern 38e-h. Die dargestellten Heizstrahler 38e-h bzw. deren Abstrahlelemente sind gebogen bzw. gekrümmt; alternativ können ebene bzw. flache Heizelemente vorgesehen sein.

Am Beispiel einer Grillvorrichtung 36d in Fig. 1 ist schematisch der Verlauf der Walzenachsen A von in der Lagereinrichtung gelagerten bzw. aufgenommenen oder eingesetzten Walzen 42a-d dargestellt. Jede Walzenachse A verläuft von der Rückseite 6a zur Vorderseite 4a parallel oder im Wesentlichen parallel zu den linken und rechten Seitenteilen 8a-d, 10a-d. Die Lagereinrichtung weist für jede Walze 42a-d bzw. Walzenachse A (rückseitigen) Stützaufnahmen 14a-h in einem an der Rückseite 6a befestigten Stützbügel 12a-d auf und zusätzlich an der Vorderseite 4a ausgebildete vorderseitige Stützaufhahmen 14a-h. In der Lagereinrichtung aufzunehmende Walzen 42a-d werden so am vorderen Achsenende 46a-d und hinteren Achsenende 48 (Fig. 10b) gelagert bzw. gestützt. Die rückseitigen und vorderseitigen Stützaufnahmen 16a-h, 14a-h (Stützelemente) sind als oben offene Aussparungen ausgebildet, so dass eine Walze 42a-d bzw. deren vorderes und hinteres Achsenende 46a-d, 48 einfach von oben in die Aufnahmen 16a-h, 14a-h gelegt werden können (Fig. 10a-b).

An die Rückseite 6a schließt nach hinten ein Versorgungskanal 30a an, z.B. für zumindest einen Motor (nicht dargestellt), zum rotierenden Antreiben der in der/den Lagereinrichtung/en aufgenommenen Walzen 42a-d. Der Versorgungskanal 30a schließt nach unten mit einem Bodengitter 32a ab, durch das z.B. der/die Motoren belüftet werden können. In der Rückseite 6a ist für jede Walze 42a-d eine Durchgangsöffnung 18a-h für das vordere Achsenende 46a-d der Walzen 42a-d vorgesehen. Nach dem Einsetzen einer Walze 42a-d in die Lagereinrichtung ragt das vordere Achsenende 46a-d durch die zugehörige Durchgangsöffnung 18a-h in den Versorgungskanal 30a. Das vordere Achsenende 46a-d ist über eine formschlüssige Steckverbindung mit einer Motorwelle eines Motors verbindbar, so dass das Drehmoment des Motors auf die Walze 42a-d übertragen werden kann. Beispielsweise kann für jede Walze 42a-d jeweils ein Motor vorgesehen sein. Alternativ können kostengünstig mit einem Motor zwei oder mehr Walzen 42a-d angetrieben werden.

In Fig. 2 und 3 ist schematisch die Position von flächigen Heizstrahlern 38a-d bzw. Abstrahlflächen der Heizstrahler 38a-d des Grillsystems 2a an den linken Seitenteilen 8a-d angedeutet. Vorzugsweise werden Infrarot-Flächenstrahler verwendet. Das Grillsystems 2a ist für den Betrieb mit elektrischen Heizstrahlern 38a-d ausgebildet. Jede der Grillvorrichtungen 36a-d weist sowohl am linken Seitenteil 8a-d als auch am rechten Seitenteil 10a-d einen Heizstrahler 38a-d auf, wobei die Abstrahlrichtung jedes Heizstrahlers 38a-d nach innen zum Grillbereich der jeweiligen Grillvorrichtung 36a-d weist. So kann jede der zwei in einer Grillvorrichtung 36a-d lagerbaren Walzen 42a-b jeweils von einer Seite gegart werden. Durch gleichzeitiges Rotieren der Walze 42a-b um ihre Achse A mittels eines Motors, wird der auf die Walze gewickelte Teig gleichmäßig rundherum gegart.

Als Heizstrahler 38a-h können Infrarotstrahler mit zumindest einer Keramikplatte als Glühkörper verwendet werden. Fig. 10a und 10b illustrieren die Anordnung von Keramikplatten 52a-d und Walzen 42a-d in benachbarten Grillvorrichtungen 36', 36". Die Keramikplatten 52a-d erstrecken sich vorzugsweise über eine Länge zwischen Vorder- und Rückseite 4a, 6a, die der Länge der aufzunehmenden Walzen 42a-d bzw. deren Mantelfläche 44a-d entspricht oder im Wesentlichen entspricht, wie schematisch und nicht maßstabsgerecht in der geschnittenen Seitenansicht von Fig. 10b dargestellt. Dadurch wird ein gleichmäßiges Garen/Crrillen des Teigs über die gesamte (Länge der) Walzenfläche gewährleistet. Die (Hitze abstrahlenden) Keramikplatten 52a-d können wie in Fig. 10a schematisch dargestellt eine Krümmung aufweisen, insbesondere so dass die Oberfläche einer Keramikplatten 52a-d zur Mantelfläche 44a-d der zugehörigen Walze 42a-d parallel oder im Wesentlichen parallel verläuft. Alternativ können die Keramikplatten eben/flach ausgebildet sein oder es können rohrförmige Abstrahlkörper vorgesehen sein.

Jede Grillvorrichtung 36a-d weist unterhalb des Grillbereichs ein Bodenteil 7a mit einem Auszug auf. Der Auszug weist eine Schubladenöffnung 24a-d bzw. Schubladenaufnahme mit einer nach oben offenen Schublade 26a-d auf. Die Schubladen 26a-d können zum Reinigen an einem Griff 28a-d nach vorne aus der jeweiligen Schubladenöffnung 24a-d herausgezogen werden. Bei der Verwendung des Grillsystems 2a sind die Walzen 42a-d oberhalb bzw. über den Schubladen 26a-d angeordnet, so dass herabfallendes Material wie z.B. Teig von der Schublade 26a-d aufgefangen werden kann. Zusätzlich kann in die Schubladen 26a-d Wasser eingefüllt werden, so dass ein Festsetzen von z.B. herabfallendem Teig in den Schubladen 26a-d verhindert wird. Das während des Grillens aus den Schubladen 26a-d verdampfende Wasser erhöht die Qualität des gegarten Gebäcks durch die lokale Erhöhung der Luftfeuchtigkeit oberhalb des Wasserspiegels in den Schubladen.

Unterhalb der Schubladen 26a-d und entlang der Vorderseite 4a weist das Grillsystem 2a ein Sockelelement 34a auf, welches z.B. als Kanal für elektrische Leitungen oder Gasleitungen verwendet werden kann. Im Sockelelement 34a können leicht zugänglich Schalter und/oder Regler einer Steuereinheit des Grillsystems 2a angeordnet sein, mit denen die Heizelemente 38a-d und der/die Motor/en ein- und ausgeschalten und optional geregelt werden können. Beispielsweise kann mittels der Steuereinheit die Temperatur der Heizelemente 38a-d und/oder die Geschwindigkeit des Motors (der Motoren) auf einen gewünschten Wert eingestellt werden.

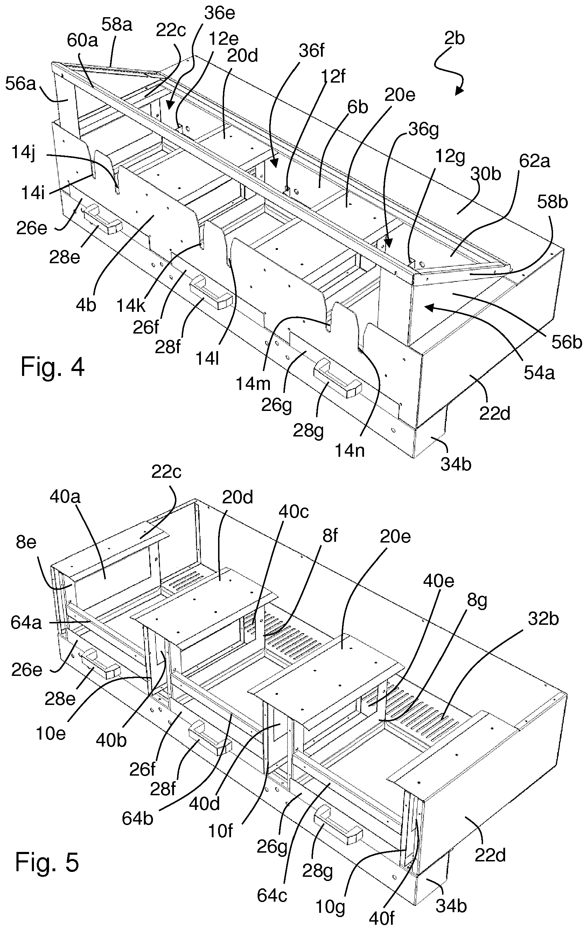

Fig. 4 zeigt eine Perspektivansicht eines Grillsystems 2b gemäß einer zweiten Ausgestaltung. Im Unterschied zum oben beschrieben Grillsystem 2a weist dieses Grillsystem 2b eine Abdeckhaube 54a auf, die sich über alle Grillbereiche des Grillsystems 2b erstreckt. In diesem Grillsystem 2b werden gasbetriebene Heizstrahler verwendet.

In Fig. 5 ist das Grillsystem 2b von Fig. 4 ohne Rückseite 6b und Vorderseite 4b dargestellt und Fig. 6 zeigt eine perspektivische Teilansicht des Grillsystems 2b. Sofern nicht anders angegeben, weist das Grillsystem 2b von Fig. 4 bis Fig. 6 alle oben in Bezug auf das Grillsystem 2a von Fig. 1 bis 3 beschriebenen Elemente mit deren Anordnung und Funktion auf. Gleiche und/oder gleichwirkende Elemente sind mit gleichen Bezugszeichen versehen.

Im Unterschied zum Grillsystem von Fig. 1, weist das Grillsystem 2b drei modular nebeneinander angeordnete Grillvorrichtungen 36e-g auf. Jede Grillvorrichtung 36e-g weist jeweils ein linkes Seitenteil 8e-g und rechtes Seitenteil 10e-g auf. Die Rückseite 6b und die Vorderseite 4b der Grillvorrichtungen 36e-g sind einteilig miteinander ausgebildet, wie oben in Bezug auf das Grillsystem 2a beschrieben. An der Rückseite 6b einer Grillvorrichtung 36a-g ist jeweils ein Stützbügel 12e-g mit zwei Stützaufhahmen angeordnet und die Vorderseite 4b weist jeweils zwei entsprechende Stützaufhahmen 14an auf. Damit können, wie oben in Bezug auf das Grillsystem 2a beschrieben, in jeder Grillvorrichtung 36e-g jeweils zwei Walzen 42a-d aufgenommen werden (vgl. Fig. 10a).

Die oberen Seitenteilabdeckungen 20d, 20e und die äußeren Seitenteilabdeckungen 22c, 22d decken die Seitenteile 8e-g, 10e-g nach außen ab. In einem Bodenteil 7b des Grillsystems 2b sind unterhalb der Grillbereiche jeder Grillvorrichtung 36e-g wie oben beschriebene Schubladen 26e-g mit Griffen 28e-g vorgesehen. Ein Sockelelement 34b ragt wie oben beschrieben an der Vorderseite 4b nach unten hervor.

An jedem Seitenteil 8e-g, 10e-g ist ein Heizelement (nicht dargestellt) angeordnet. In dieser Ausgestaltung weist jedes Seitenteil 8e-g, 10e-g eine Aufnahmeöffnung 40e-f zur Aufnahme eines Heizelements auf. Auf diese Weise kann ein Heizelement, insbesondere bei einem Flächenstrahler z.B. die zugehörige Keramikplatte, platzsparend teilweise innerhalb der Seitenteile 8e-g, 10e-g angeordnet werden. Da gasbetriebene Heizstrahler mehr Platz benötigen als elektrisch betriebene Heizstrahler sind beim (gasbetriebenen) Grillsystem 2b die Abstände d (Fig. 6) zwischen nebeneinanderliegenden bzw. Rücken an Rücken liegenden) Seitenteilen nebeneinanderliegender Grillvorrichtungen 36e-g größer als beim (elektrisch betriebenen) Grillsystem von Fig. 1. Wie in Fig. 10a schematisch dargestellt, liegt bei nebeneinanderliegenden Grillvorrichtungen 36', 36" der (mittlere) Abstand a zwischen Glühkörpern 52b, 52c (Keramikplatten) nebeneinanderliegender Heizstrahler bei gasbetriebenen Heizstrahlern zwischen 7-12 cm, vorzugsweise 8-11cm, besonderes bevorzugt bei oder bei etwa 9 cm, und bei elektrisch betriebenen Heizstrahlern zwischen 4-8 cm, vorzugsweise 5-7 cm, besonderes bevorzugt bei oder bei etwa 6 cm.

Um einen stabilen und robusten Grundkörper für einen sicheren Betrieb des Grillsystems 2b bzw. der Heizstrahler mit Gas bereitzustellen, weist das Grillsystem 2b zusätzlich an der Vorderseite jeder Grillvorrichtung 36e-g horizontale Versteifungsstreben 64a-c und im Versorgungskanal 30b zwischen den Grillvorrichtungen 36e-g vertikale Trennwände 70a-f auf.

In dieser Ausgestaltung ist die Abdeckhaube 54a in Rahmenbauweise ausgebildet und verläuft von der Rückseite 6b zur Vorderseite 4b schräg nach oben. Mittels der Abdeckhaube 54a wird ein unbeabsichtigter bzw. unbefugter Zugriff von der Rückseite (und Seite) in den Grillbereich der Grillvorrichtungen 36e-g verhindert.

Die Abdeckhaube 54a weist zwei außen am Grillsystem angeordnete, (keilförmige) seitliche Abschirmelemente 56a, 56b auf, die die Grillbereiche zur Seite abschirmen und zugleich eine Auflage für einen Rahmen der Abdeckhaube bilden wie nachfolgend beschrieben. Auf jedem seitlichen Abschirmelement 56a, 56b ist jeweils ein seitliches Rahmenelement 58a, 58b angeordnet. Ein vorderseitiges Rahmenelement 60a ist mit den beiden seitlichen Rahmenelemente 58a, 58b verbunden und bildet einen U-förmigen Teilrahmen. Das vorderseitige Rahmenelement 62 liegt durch die keilförmigen seitlichen Abschirmelemente 56a, 56b vertikal beabstandet zu einer Oberkante der Vorderseite 4b. Durch diese Anordnung ergibt sich zwischen der Vorderseite 4b und der Abdeckhaube 54 eine Öffnung. In der von den Rahmenelementen 58a, 58b, 60a und der Rückseite 6b ausgebildeten Aufnahme ist eine transparente Scheibe 62a, z.B. hitzebeständiges Glas, eingesetzt und befestigt. Optional ist ein zusätzliches rückseitiges Rahmenelement vorgesehen, so dass alle Rahmenelemente zusammen einen umlaufenden Rahmen für eine transparente Scheibe ausbilden. Durch die Scheibe können Kunden den Grillvorgang in den Grillvorrichtungen 36e-g beobachten.

In Bezug auf das schematisch dargestellte Grillsystem 2' von Fig. 10b wird der Vorteil des schrägen bzw. von einer Rückseite 6' zu einer Vorderseite 4' hin ansteigenden Verlaufs einer Abdeckhaube 54' bei der Verwendung des Grillsystems 2b erläutert. In Fig. 10b ist schematisch und nicht maßstabsgerecht in seitlicher Schnittansicht eine Grillvorrichtung 36' mit Abdeckhaube 54' und in einer in der Grillvorrichtung 36' gelagerten Walze 42b dargestellt. Unterhalb der Walze 42b ist im Bodenteil 7' eine Schublade 26' mit Griff 28' angeordnet und an die Rückseite 6' schließt ein Versorgungskanal 30' an. Die Walze 42b weist an ihrem hinteren Ende einen Griff 50 auf. Durch Ziehen (Pfeil 1) entlang der Walzenachse A und anschließendes nach oben Schwenken bzw. Heben (Pfeil 2) am Griff 50 kann die Walze 42b zunächst aus der Durchgangsöffnung 18' in der Rückseite und anschließend aus der rückseitigen Stützaufnahmen 16' am Stützbügel 12' und der vorderseiteigen Stützaufnahmen 14' nach oben herausgehoben und aus (dem Grillbereich) der Grillvorrichtung 36' entnommen werden. Durch den schräg ansteigenden Verlauf der Abdeckhaube 54' wird an der Vorderseite der Grillvorrichtung 36' ausreichend Platz bereitgestellt, um die Walze 42b am Griff nach oben zu Schwenken. Zusätzlich bietet die durchgehende ebene Fläche der transparenten Scheibe 62c einen ungehinderten Blick in die Grillbereiche der Grillvorrichtungen 36', 36" bzw. 36e-g des Grillsystems 2' bzw. 2b.

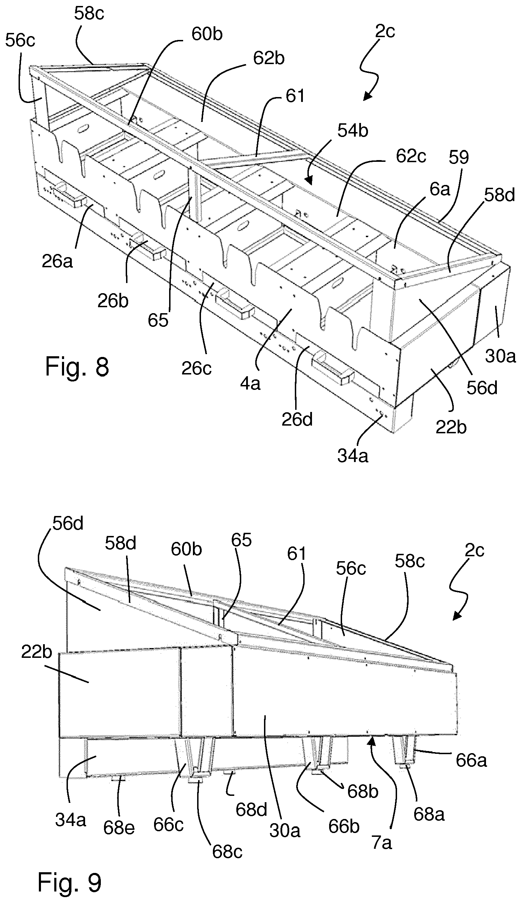

Fig. 8 zeigt eine vorderseitige Perspektivansicht eines Grillsystems 2c, deren vier nebeneinander angeordnete Grillvorrichtungen 36a-d den gleichen Aufbau wie die Grillvorrichtungen 36a-d des Grillsystems 2a von Fig. 1 aufweisen. Der einzige Unterschied zwischen den Grillsystemen 2a, 2c ist dass das Grillsystem 2c von Fig. 8 zusätzlich eine Abdeckhaube 54b aufweist.

Die Abdeckhaube 54b ist ebenfalls in Rahmenbauweise aufgebaut. Ein vorderseitiges Rahmenelement 60b erstreckt sich über die vorderseitige Länge des Grillsystems 2c, ein rückseitiges Rahmenelement 59 erstreckt sich über die rückseitige Länge des Grillsystems 2c und beide Rahmenelemente 60b, 59 sind seitlich mit zwei seitlichen Rahmenelementen 58c, 58d zu einem Rahmen verbunden. Zwei keilförmige seitliche Abschirmelemente 56b, 56d bieten zum einen eine Auflage für die seitlichen Rahmenelemente 58c, 58d bzw. den Rahmen und gewährleisten einen von der Rückseite zur Vorderseite schräg ansteigenden Verlauf der Abdeckhaube 54b, wie bereits in Bezug auf die Abdeckhaube 54a von Fig. 4 beschrieben.

Im Unterschied zur Abdeckhaube 54a von Fig. 4, weist die Abdeckhaube 54b ein zusätzliches Zwischen-Rahmenelement 61 auf, das zwischen Rück- zur Vorderseite 6a, 4a verläuft. Das zusätzliche Rahmenelement 61 unterteilt die von dem vorderseitigen Rahmenelement 60b und den seitlichen Rahmenelementen 58c, 58d aufgespannte Fläche, so dass statt einer Scheibe 62a zwei transparente Scheiben 62b, 62c eingesetzt werden können. Das Grillsystem 2c von Fig. 8 mit vier nebeneinander angeordneten Grillvorrichtungen 36a-d ist im Vergleich zum Grillsystem 2b mit drei nebeneinander angeordneten Grillvorrichtungen 36e-g länger bzw. breiter. Mittels des Zwischen-Rahmenelements 61 kann die vom Rahmen aufgespannte Fläche in kleinere Bereiche unterteilt werden, so dass kleinere und einfach handhabbare transparente Scheiben 62b, 62c in die Rahmen eingesetzt werden können. In dieser Ausgestaltung verläuft die Abdeckhaube 54b bis zu einer Vorderkante des Versorgungskanals 30a. Zwischen der Abdeckhaube 54b bzw. dem vorderseiteigen Rahmenelement 60b und der Vorderseite 4a ist eine vertikale/senkrechte Stützstrebe 65 angeordnet, um das Gewicht der Scheiben 62b, 62c abzufangen.

Fig. 9 zeigt eine Perspektivansicht des Grillsystems 2c von Fig. 8 von vorne. Im Bereich der Rückseite 6a sind an der Unterseite des Grundkörpers des Grillsystems 2c Sockelfußelemente 66a-c vorgesehen. Bei der Verwendung steht das Grillsystem 2c mittels dem Sockelelement 34a und den Sockelfußelementen 66a-c auf einem Untergrund bzw. einer Arbeitsfläche. Die Sockelfußelemente 66a-c gewährleisten, dass das Grillsystem 2c an seiner Unterseite gut belüftet wird und insbesondere die Lüftungsöffnungen der Bodengitters 32a zur Belüftung des Versorgungskanals 30a freiliegen.

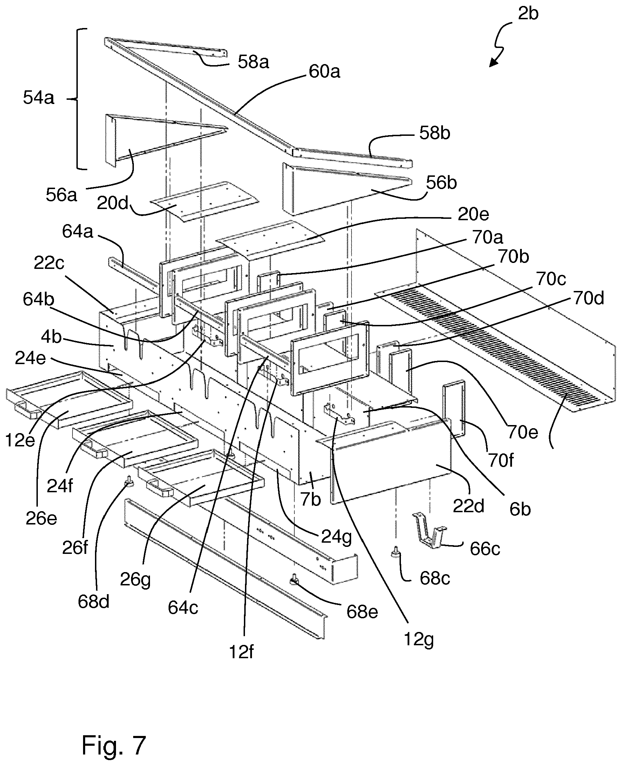

An der Unterseite des Sockelelements 34a und/oder den Sockelfußelementen 66a-c können zusätzlich Stellfüße 68a-e vorgesehen sein, mit denen Unebenheiten eines Untergrunds ausgeglichen werden können. Bevorzugt ist zumindest einer der Stellfüße 66a-e höhenverstellbar. Besonders bevorzugt sind die Stellfüße 68a-e rutschhemmend und/oder dämpfend ausgebildet. Das Grillsystem 2b von Fig. 4 weist ebenfalls Sockelfußelemente 66a-c und Stellfüße 66a-e auf (vgl. Fig. 7).

**Bezugszeichenliste**

| | | | |
|---|---|---|---|
| 2a-c, 2' | Modulares Grillsystem | 42a-d | Walze |
| 4a-b, 4' | Vorderseite | 44a-d | Mantelfläche Walze |
| 6a-b, 6' | Rückseite | 46a-d | vorderes Achsenende |
| 7a-b, 7' | Bodenteil | 48 | hinteres Achsenende |
| 8a-g | linkes Seitenteil | 50 | Walzengriff |
| 10a-g | rechtes Seitenteil | 52a-d | gebogene Keramikplatte |
| 12a-g, 12' | Stützbügel | 54a-b, 54' | Abdeckhaube |
| 14a-n, 14' | vorderseitiges Stützelement / Stützaufnahme | 56a-d | seitliches Abschirmelement |
| | | 58a-d | seitliches Rahmenelement |
| 16a-j, 16' | rückseitiges Stützelement / Stützaufnahme | 59 | rückseitiges Rahmenelement |
| | | 60a-b | vorderseitiges Rahmenelement |
| 18a-h, 18' | Durchgangsöffnung Walzenachse | | |
| | | 61 | Zwischen-Rahmenelement |
| 20a-e | obere Seitenteilabdeckung | 62a-c | hitzebeständige Glasscheibe |
| 22a-d | äußere Seitenteilabdeckung | 64a-c | Versteifungsstreben |
| 24a-g | Schubladenaufnahmeöffnung | 65 | Stützstrebe |
| 26a-g, 26' | Schublade | 66a-c | Sockelfußelement |
| 28a-g, 28' | Griff | 68a-e | Stellfuß |
| 30a-b, 30' | Versorgungskanal / Motorraum | 70a-f | Trennwände |
| 32a-b | Bodengitter | A | Walzenachse / Drehachse |
| 34a-b | Sockelelement | a | Abstand benachbarte |
| 36a-g | Grillvorrichtung | | Keramikplatten |
| 36', 36" | Grillvorrichtung | d | Abstand benachbarter Seitenteile |
| 38a-h | Heizstrahler (Keramikelement) | | |
| | | L | Walzenlänge / Walzenmantelflächenlänge |
| 40a-f | Aufnahmeöffnung Heizstrahler | | |

## Patentansprüche

1. Grillvorrichtung für auf Walzen gewickelten Teig oder gewickeltes Grillgut, wobei die Grillvorrichtung (36a-g; 36'; 36") aufweist:
einen Grundkörper mit umlaufend angeordneten Seitenelementen (4a-b, 4'; 6a-b, 6'; 8a-g; 10a-g), wobei die Seitenelemente einen Grillbereich der Grillvorrichtung (36a-g; 36'; 36") umgeben und zumindest eine Rückseite (6a-b, 6'), eine Vorderseite (4a-b, 4') und zwei die Rück- und Vorderseite verbindende Seitenteile (8a-g; 10a-g) aufweisen,
eine Steuereinheit,
eine rückseitig und/oder vorderseitig am Grundkörper angeordnete Lagereinrichtung (12a-g, 12'; 14a-n, 14'; 16a-j, 16') für zumindest eine Walze (42a-d), wobei mittels der Lagereinrichtung (12a-g, 12'; 14a-n, 14'; 16a-j, 16') zumindest eine Walze (42a-d) im Grillbereich horizontal oder im Wesentlichen horizontal um ihre Drehachse (A) drehbar gelagert aufnehmbare ist,
einen Motor zum rotierenden Antreiben von in der Lagereinrichtung (12a-g, 12'; 14a-n, 14'; 16a-j, 16') aufnehmbar Walzen (42a-d), und
zumindest eine zum Grillbereich weisende Heizeinrichtung (38a-h), vorzugsweise zumindest eine Flächenheizeinrichtung oder ein Flächenstrahler, wobei die zumindest eine Heizeinrichtung (38a-h) an einem der Seitenteile (8a-g; 10a-g) angeordnet ist.

2. Grillvorrichtung nach Anspruch 1,
wobei mittels der Lagereinrichtung (12a-g, 12'; 14a-n, 14'; 16a-j, 16') zwischen einer Rückseite (6a-b, 6') und Vorderseite (4a-b, 4') des Grundkörpers zumindest zwei Walzen (42a-d) nebeneinander und horizontal oder im Wesentlichen horizontal um ihre Drehachsen (A) drehbar gelagert aufnehmbare sind, und
wobei an gegenüberliegenden Seitenteilen (8a-g; 10a-g) des Grundkörpers jeweils eine Heizeinrichtung (36a-g; 36'; 36") angeordnet ist.

3. Grillvorrichtung nach Anspruch 1 oder 2, wobei die Lagereinrichtung für jede aufzunehmende Walze (42a-d) zumindest ein Stützelement (14a-n, 14'; 16a-j, 16') zum Stützen der jeweilige Walzenachse (A) an der Rückseite (6a-b, 6') und/oder der Vorderseite (4a-b, 4') des Grundkörpers aufweist, insbesondere nach oben offene Stützelemente (14a-n, 14'; 16a-j, 16').

4. Grillvorrichtung nach Anspruch 1, 2 oder 3,
wobei zumindest eine der Heizeinrichtungen (38a-h) als Infrarotstrahler mit zumindest einer Keramikplatte (52a-d) als Glühkörper ausgebildet ist, und
wobei die von der zumindest einen Keramikplatte (52a-d) ausgebildete Abstrahlfläche flach ist oder zumindest teilweise gekrümmt ist, insbesondere parallel oder im Wesentlichen parallel zu einer benachbart zur Heizeinrichtung (38-h) mittel der Lagereinrichtung (12a-g, 12'; 14a-n, 14'; 16a-j, 16') lagerbaren Walzenmantelfläche (44a-d) ist,
wobei die Heizeinrichtungen (38a-h) insbesondere gasbetrieben oder elektrisch betrieben sind.

5. Grillvorrichtung nach einem der vorhergehenden Ansprüche, wobei zwischen jeder Heizeinrichtung (38a-h) und dem Grillbereich ein Berührungsschutz angeordnet ist, insbesondere ein Berührungsschutz in Form eines Metallgitters, einer Glasscheibe, einer Glaskeramikscheibe.

6. Grillvorrichtung nach einem der vorhergehenden Ansprüche,
wobei die Steuereinheit für jede Heizeinrichtung (38a-h) einen Schalter zum einzelnen Ein-/Ausschalten und/oder Einstellen der Heizleistung einer jeden der Heizeinrichtungen aufweist, oder
wobei die Steuereinheit einen Schalter zum gemeinsamen Ein-/Ausschalten und/oder Einstellen der Heizleistung von zumindest zwei Heizeinrichtungen (38a-h) aufweist.

7. Grillvorrichtung nach einem der vorhergehenden Ansprüche,
wobei der Grundkörper ein Bodenteil (7a; 7b; 7') aufweist, wobei am Bodenteil (7a; 7b; 7') zumindest ein Auszug (24a-g; 26a-g, 26') angeordnet ist und/oder das Bodenteil (7a; 7b; 7') als zumindest ein Auszug (24a-g; 26a-g, 26') ausgebildet ist, und
wobei eine Oberseite des zumindest einen Auszugs (24a-g; 26a-g, 26') zum Grillbereich des Grundkörpers offen ist, so dass bei der Verwendung der Grillvorrichtung (36a-g; 36'; 36") von in der Lagereinrichtung (12a-g, 12'; 14a-n, 14'; 16a-j, 16') aufgenommenen Walzen (42a-d) herabfallendes Material von dem zumindest einen Auszug (24a-g; 26a-g, 26') aufgefangen wird,
wobei insbesondere der zumindest eine Auszug eine wasserdicht ausgebildete Schublade (26a-g, 26') aufweist, so dass bei der Verwendung der Grillvorrichtung Wasser in die Schublade (26a-g, 26') einfüllbar ist.

8. Grillvorrichtung nach einem der vorhergehenden Ansprüche,
wobei die Grillvorrichtung (36a-g; 36'; 36") eine Abdeckhaube (54a; 54b; 54') aufweist, die den Grillbereich der Grillvorrichtung (36a-g; 36'; 36") zur Rückseite (6a-b, 6') und/oder nach oben abschirmt,
wobei die Abdeckhaube (54a; 54b; 54') insbesondere aus einem transparenten Material ausgebildet ist, insbesondere aus Glas, vorzugsweise hitzebeständigem Glas, Kunststoff, vorzugsweise hitzebeständigem Kunststoff.

9. Grillvorrichtung nach Anspruch 8,
wobei die Abdeckhaube (54a; 54b; 54') von der Rückseite (6a-b, 6') zur Vorderseite (4a-b, 4') nach oben verläuft,
wobei insbesondere zwischen der Vorderseite (4a-b, 4') und der Abdeckhaube (54a; 54b; 54') zumindest eine Öffnung zum Grillbereich der Grillvorrichtung (36a-g; 36'; 36") vorgesehen ist, wobei durch die zumindest eine Öffnung Walzen (42a-d) in die Lagereinrichtung (12a-g, 12'; 14a-n, 14'; 16a-j, 16') einsetzbar und entnehmbar sind.

10. Grillvorrichtung nach Anspruch 8 oder 9,
wobei die Abdeckhaube (54a; 54b; 54') feststehend ist, insbesondere nicht schwenkbar ist, oder
wobei die Grillvorrichtung eine Schwenkvorrichtung aufweist, wobei zumindest ein Teil der Abdeckhaube mittels der Schwenkvorrichtung von einer Geschlossenstellung in eine Offenstellung schwenkbar ist und umgekehrt.

11. Grillvorrichtung nach einem der vorhergehenden Ansprüche,
wobei der Grundkörper, die Lagereinrichtung (12a-g, 12'; 14a-n, 14'; 16a-j, 16') und/oder die Schublade (26a-g, 26') aus Metallblech, insbesondere Edelstahlblech, ausgebildet ist/sind, und
wobei vorzugsweise die Bleche mittels Schrauben und/oder Nieten miteinander verbunden sind, insbesondere nicht miteinander verschweißt sind.

12. Grillvorrichtung nach einem der vorhergehenden Ansprüche, wobei die Grillvorrichtung (36a-g; 36'; 36") so ausgebildet ist, dass Walzen (42a-d) mit einer Walzenlänge (L) zwischen 13-50 cm, 15-48 cm, 20-45 cm, 25-44 cm, 28-43 cm in der Lagereinrichtung (12a-g, 12'; 14a-n, 14'; 16a-j, 16') drehbar gelagert aufnehmbare sind, vorzugsweise mit einer Walzenlänge (L) von oder von etwa 42 cm oder mit einer Walzenlänge (L) von oder von etwa 30 cm.

13. Grillset mit
einer Grillvorrichtung (36a-g; 36'; 36") nach einem der vorhergehenden Ansprüche, und
zumindest einer Walze (42a-d) zur Verwendung mit der Grillvorrichtung (36a-g; 36'; 36"),
wobei die Walze (42a-d) eine Walzenlänge (L) zwischen 13-50 cm, 15-48 cm, 20-45 cm, 25-44 cm, 28-43 cm aufweist, vorzugsweise eine Walzenlänge (L) von oder von etwa 42 cm oder eine Walzenlänge (L) von oder von etwa 30 cm aufweist.

14. Modulares Grillsystem für auf Walzen gewickelten Teig oder gewickeltes Grillgut, wobei das Grillsystem (2a; 2b; 2') zumindest zwei nebeneinander angeordnete Grillvorrichtungen (36a-g; 36'; 36") nach einem der vorhergehenden Ansprüche 1 bis 12 oder Grillsets nach Anspruch 13 aufweist, insbesondere Grillvorrichtungen (36a-g; 36'; 36") mit Lagereinrichtungen (12a-g, 12'; 14a-n, 14'; 16a-j, 16') zum drehbaren Lagern von zwei Walzen (42a-d) und zwei Heizeinrichtungen (38a-h), die an gegenüberliegenden Seitenteilen (8a-g; 10a-g) des jeweiligen Grundkörpers angeordnet sind.

15. Modulares Grillsystem nach Anspruch 14, wobei bei nebeneinanderliegenden Grillvorrichtungen (36a-g; 36'; 36") der mittlere Abstand (d) zwischen den Heizkörpern (52a-d) nebeneinanderliegende Heizeinrichtungen (38a-h):
- bei gasbetriebenen Heizeinrichtungen zwischen 7-12 cm, vorzugsweise zwischen 8-11 cm, besonderes bevorzugt bei oder bei etwa 9 cm liegt, und
- bei elektrisch betriebenen Heizeinrichtungen zwischen 4-8 cm, vorzugsweise zwischen 5-7 cm, besonderes bevorzugt bei oder bei etwa 6 cm liegt.
